# EUROPEAN PATENT SPECIFICATION

(11) **EP 2 736 030 B1**
(45) Date of publication and mention of the grant of the patent: **06.09.2017**
(21) Application number: 12814923.4
(22) Date of filing: 20.07.2012
(51) Int. Cl.: G09B 19/24, G09B 19/00, G01F 3/04, G09B 23/28

(54) **SYRINGE OPERATION PRACTICE DEVICE**
SPRITZENANWENDUNGSVORRICHTUNG
DISPOSITIF D'ACTIONNEMENT DE SERINGUE

(30) Priority: 21.07.2011 JP 2011159928
(43) Date of publication of application: 28.05.2014
(73) Proprietor: ICST Corporation, Saitama-shi, Saitama 338-0001 (JP)
(72) Inventor: YOKOI Hiroyuki, Saitama-shi Saitama 338-0001 (JP)
(74) Representative: TBK
(86) International application number: PCT/JP2012/068410
(87) International publication number: WO 2013/012055

(56) References cited:
- WO-A1-2005/096249
- JP-A- 2008 194 472
- JP-A- 2010 510 012
- US-A- 5 296 379
- US-A1- 2007 235 083

## Description

The present invention relates to a syringe operation detection device used when detecting an operation state of a plunger in a syringe.

When a healthcare professional such as a doctor or a nurse uses a syringe for the first time, it is necessary to practice how to use it. When practicing blood collection, for example, a blood collection method is learned by using an artificial body created to resemble human skin and flesh and blood vessels, inserting a needle tip of a syringe into an artificial blood vessel inside an artificial skin, and drawing artificial blood as shown in document JP 2010-243867 A. When practicing drug administration, a drug administration method is learned by drawing, with a syringe, a drug used for practice from an ampule used for practice, inserting a needle tip into an artificial blood vessel in an artificial skin, and injecting the drug used for practice.

Document US 2007/235083 A1 discloses an apparatus for adjustment and sensing of gastric band pressure, which is used instead of an implanted device.

How much power is applied by an operator to a plunger is crucial for drawing or injection by a syringe. For example, if a plunger is pulled too abruptly at the time of blood collection, platelets and the like in blood may be damaged. Moreover, if a plunger is pushed too abruptly at the time of drug administration, for example, strain on a blood vessel is increased.

However, since how much power is applied to a plunger depends on an individual feel of a hand, it is difficult for a person with experience to teach a beginner. Therefore, whether drawing or injection is being performed in an appropriate state cannot be checked in reality.

It may be conceivable to measure how much power is being applied by fingers to a plunger by means of a load sensor or the like. However, a frictional force between a syringe barrel and a plunger varies depending on a manufacturer or size of a syringe. Thus, it is impossible to figure out whether an appropriate drawing force or injection force is being applied or not. Moreover, even if a syringe dedicated for practice use is manufactured to do practice beforehand, there is a problem that the practice outcome cannot be successfully made use of since various syringes need to be used in medical facilities.

This kind of problem is not limited to the time when a syringe operation is practiced. For example, also when a syringe is actually used in a medical facility or the like, there exists no means for evaluating how much power is being applied to a plunger in objective terms.

The present invention has been made in view of the above-described problems, and its object is to provide a syringe operation detection device capable of being applied to a syringe actually used and evaluating a drawing or injecting state in objective terms.

The object of the invention is achieved by a syringe operation detection device according to claim 1. Advantageous embodiments are carried out according to the dependent claims.

The present invention achieving the above-described object is a syringe operation detection device for detecting a drawing or injecting operation of a plunger in a syringe, the device including: a female joint part to be joined to a barrel tip in a syringe barrel of the syringe; a male joint part to be joined to a needle hub of a syringe needle in the syringe; a coupling container placed between the female joint part and the male joint part, for allowing the female joint part to be continuous with the male joint part while being closed externally; and a detector placed in any one of the coupling container, the female joint part, and the male joint part, the detector detecting a pressure, flow velocity, or flow rate of a fluid moving between the syringe barrel and the syringe needle.

The syringe operation detection device of the above-described invention is further characterized in that the female joint part and the male joint part are coaxially fixed.

It is further characterized in that the detector of the syringe operation detection device of the above-described invention includes a pressure sensor placed inside the coupling container.

It is further characterized in that the detector of the syringe operation detection device of the above-described invention includes a flow rate sensor placed in the coupling container.

It is further characterized in that the detector of the syringe operation detection device of the above-described invention includes a flow velocity sensor placed in the coupling container.

It is further characterized in that the coupling container of the syringe operation detection device of the above-described invention has a shape extending more in a radial direction with respect to the female joint part and the male joint part, and the detector is placed at a position shifted in the radial direction from a central axis of the female joint part and the male joint part.

It is further characterized in that the syringe operation detection device of the above-described invention further includes a controller to which a signal from the detector is inputted, and the controller includes: a sensing section for detecting the signal from the detector; a determination criteria setting section for setting a determination criterion value; and a determination section for determining a difference between the signal and the determination criterion value and informing a determination result to an operator of the syringe by means of light, an image, or a sound.

### Advantageous Effects of Invention

According to the syringe operation detection device of the present invention, it can be freely attached to various syringes and it becomes possible to figure out a drawing or injecting state in objective terms.

### Brief Description of Drawings

FIG. 1 is a diagram showing an entire configuration of a syringe operation detection device according to an embodiment of the present invention.
FIG. 2(A) is an axial cutaway view and FIG. 2(B) is a radial cutaway view showing an intermediate inserting member of the syringe operation detection device in an enlarged manner.
FIG. 3 is a block diagram showing an internal configuration of a controller of the syringe operation detection device.
FIG. 4 is a block diagram showing a functional configuration of the controller of the syringe operation detection device.
FIG. 5 is a graph showing a determination method by the controller of the syringe operation detection device.
FIG. 6 is a side view showing, as an example, a state where the syringe operation detection device is used.
FIG. 7 is a diagram showing another configuration example of the syringe operation detection device.
FIG. 8 is a diagram showing another configuration example of the syringe operation detection device.
FIG. 9(A) and FIG. 9(B) are diagrams showing other configuration examples of the syringe operation detection device, and FIG. 9(C) is a graph showing a determination method by the syringe operation detection device.

### Description of Embodiment

An embodiment of the present invention will now be described below in detail with reference to the drawings.

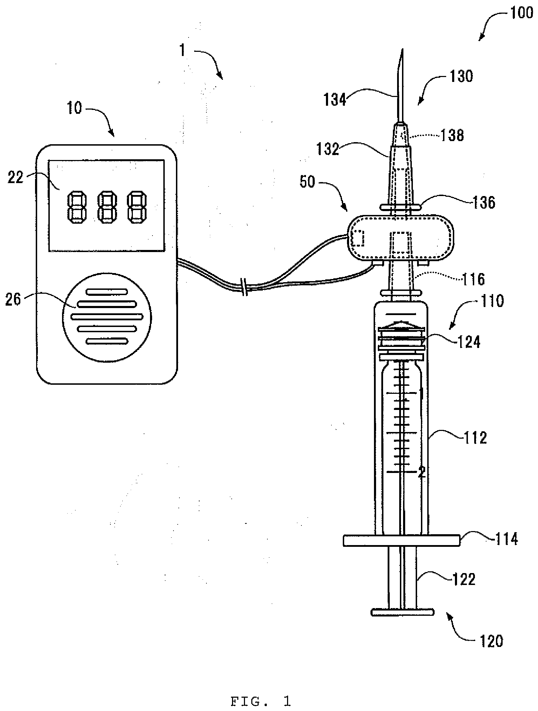

FIG. 1 shows an entire configuration of a syringe operation detection device 1 according to the embodiment of the present invention. The syringe operation detection device 1 is used for a general-purpose syringe 100 and configured to include a controller 10 and an intermediate inserting member 50. Note that there is introduced herein a case where the syringe operation detection device 1 is used when practicing the operation of the syringe 100.

The syringe 100 typically includes: a syringe barrel 110; a plunger 120 to be inserted into the syringe barrel 110; and a syringe needle 130 provided at a tip of the syringe barrel 110. The syringe barrel 110 includes : an outer barrel 112 having a tubular shape with a bottom; a flange 114 provided on an open-ended side of the outer barrel 112 so as to extend in a radial direction; and a barrel tip 116 provided on a bottom (needle tip) side of the outer barrel 112 so as to project in an axial direction. The diameters or lengths of the outer barrel 112 and the flange 114 vary depending on a capacity of the syringe 100. On the other hand, the size of the barrel tip 116 is determined in accordance with the standard since the barrel tip 116 serves as a joint part to the syringe needle 130. Specifically, an outer shape of the barrel tip 116 cannot be joined to a female Luer taper inspection gauge specified by the ISO. The diameter of a tip portion of the barrel tip 116 is set to be 6.0 ± 0.5 mm, the length thereof to be 15 mm or greater, and the taper angle thereof to be 125 ± 25/1000. Although there is illustrated herein a case where the bare barrel tip 116 is used, it may be a locking barrel tip with the circumference thereof being surrounded by an inside screw.

The plunger 120 includes: a rod-shaped pusher 122 to be operated by an operator's hand; and a gasket 124 to be attached to a tip of the pusher 122 for sealing an internal space within the syringe barrel 110 by utilizing the elasticity of a rubber.

The syringe needle 130 includes: a tubular needle hub 132 into which the barrel tip 116 of the syringe 100 is inserted; and a needle tube 134 coaxially placed on a tip side of the needle hub 132. A flange 136 is formed on an open side of the needle hub 132. The size of a needle hub bore 138 formed inside the needle hub 132 is determined in accordance with the standard since the needle hub bore 138 serves as a joint part to the barrel tip 116 of the syringe barrel 110. Specifically, it is required to be unable to be joined to a male Luer taper inspection gauge specified by the ISO and to have a shape capable of being joined to the above-described barrel tip 116.

The intermediate inserting member 50 is inserted between the syringe barrel 110 and the syringe needle 130 in the syringe 100, and detects pressures and flow rates inside the syringe barrel 110 and the syringe needle 130. The controller 10 provides various pieces of information to a learner on the basis of signals of the pressures and the flow rates detected in the intermediate inserting member 50.

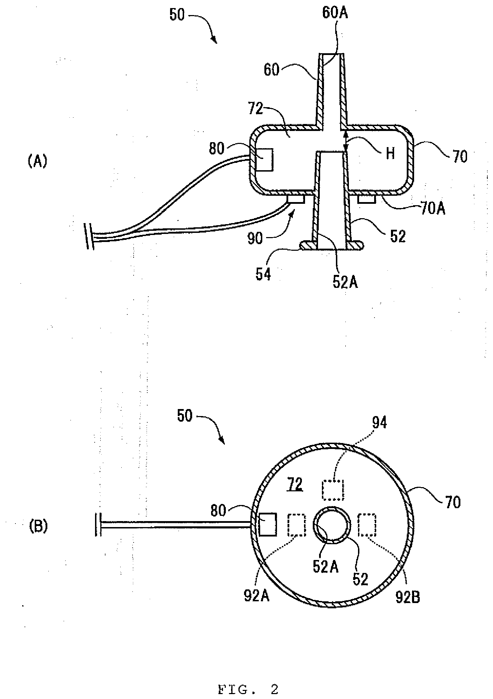

As shown in an enlarged view in FIG. 2, the intermediate inserting member 50 includes: a female joint part 52 to be joined to the barrel tip 116 of the syringe barrel 110; a male joint part 60 to be joined to the needle hub 132 of the syringe needle 130; and a coupling container 70 placed between the female joint part 52 and the male joint part 60 for allowing the internal space of the female joint part 52 to be continuous with that of the male joint part 60 while being closed externally.

The female joint part 52 is formed in a cylindrical shape approximately the same as that of the needle hub 132 of the syringe needle 130. Thus, a joint bore 52A therein cannot be joined to the male Luer taper inspection gauge specified by the ISO and has a shape capable of being joined to the above-described barrel tip 116. A flange 54 extending in the radial direction is further formed at an open end of the female joint part 52.

The male joint part 60 is formed in a cylindrical shape approximately the same as that of the barrel tip 116 of the syringe barrel 110. Thus, an outer shape of the male joint part 60 cannot be joined to the female Luer taper inspection gauge specified by the ISO. The diameter of a tip portion thereof is set to be 6.0 ± 0.5 mm, the length thereof to be 15 mm or greater, and the taper angle thereof to be 125 ± 25/1000. Although there is illustrated herein a case where the bare male joint part 60 is used, it may employ such a locking structure that the circumference thereof is surrounded by an inside screw so as to be screwed with the flange 136 of the needle hub 132.

The coupling container 70 coaxially holds the female joint part 52 and the male joint part 60. An internal space 72 of the coupling container 70 is in an externally-closed state and continuous with the internal spaces of the syringe barrel 110 and the syringe needle 130. Moreover, the internal space 72 extends more in the radial direction thereof than the inner diameters of the female joint part 52 and the male joint part 60. By expanding the internal space 72 in the radial direction thereof as described above, a gap H between the female joint part 52 and the male joint part 60 can be made small as much as possible, while ensuring a space to accommodate a pressure sensor 80, so as to bring them close to each other.

Specifically, the coupling container 70 is a cylindrical container, and the female joint part 52 and the male joint part 60 are placed to be coaxial with the coupling container 70. As a result, the internal space 72 of the coupling container 70 is continuous with the joint bore 52A of the female joint part 52 and an inner periphery 60A of the male joint part 60. As a result, a fluid moving between the syringe barrel 110 and the syringe needle 130 leaks into the side of the internal space 72 through the gap H.

The pressure sensor 80 is placed in the internal space 72 of the coupling container 70. The pressure sensor 80 is placed at a position shifted in the radial direction from the central axis of the female joint part 52 and the male joint part 60. The purpose thereof is to reduce the gap H between the female joint part 52 and the male joint part 60 as much as possible as mentioned previously. The pressure sensor 80 detects a pressure state in the internal space 72 on a real-time basis and transmits a signal thereof to the controller 10.

Furthermore, a flow rate sensor 90 is placed on an outer periphery 70A of the coupling container 70 on an axial direction side thereof. The flow rate sensor 90 detects a flow rate of a fluid flowing through the inside of the female joint part 52. Specifically, the flow rate sensor 90 includes: a pair of electrodes 92A and 92B placed so as to interpose the female joint part 52 therebetween in the radial direction; and an exciting coil 94 placed in a direction perpendicular to this interposing direction, the exciting coil 94 applying a magnetic field to a fluid. When a magnetic field is applied to a fluid flowing through the inside of the female joint part 52 by means of the exciting coil 94, an electromotive force is generated in this fluid, and the electromotive force is then detected by the pair of electrodes 92A and 92B. Although there is illustrated herein a case where a flow rate is detected by utilizing an electromagnetic field, the present invention is not limited thereto. A Karman vortex may be generated in a fluid and then detected by means of ultrasonic waves or the like. Alternatively, electrodes may be placed on both sides of a flow passage and a flow rate may be detected by a change in capacitance therein. Further alternatively, the sensor may be placed so as to be in direct contact with a fluid, thereby directly detecting a flow rate thereof.

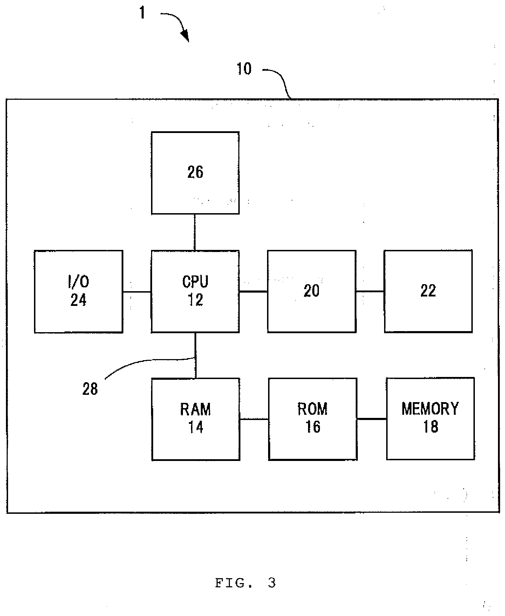

FIG. 3 discloses a hardware configuration of the controller 10. The controller 10 is configured to include a CPU 12, a first storage medium 14, a second storage medium 16, a third storage medium 18, an input device 20, a display device 22, an input and output interface 24, a speaker 26, and a bus 28. The CPU 12 is what is called a central processing unit, and executes various programs to realize various functions of the controller 10. The first storage medium 14 is what is called a RAM (random access memory) and is a memory used as a work area of the CPU 12. The second storage medium 16 is what is called a ROM (read-only memory) and is a memory for storing a basic operating system, a firmware, or the like executed in the CPU 12. The third storage medium 18 is composed of a hard disk device with a built-in magnetic disk, a disk device for accommodating a CD, DVD, or BD, a non-volatile semiconductor flash memory device, or the like and stores therein various programs to be executed in the CPU 12, sensing data from the pressure sensor 80 and the flow rate sensor 90, various reference data set for determination, and the like. The input device 20 is a device such as an input key, a keyboard, a mouse, or the like used for inputting various pieces of information. The display device 22 is a display for displaying sensing results and various determination results. The input and output interface 24 is an interface to which signals of the pressure sensor 80 or the flow rate sensor 90 are inputted, or an interface for externally inputting reference data required for a program or for outputting sensing data to the outside. The speaker 2 6 informs as an information sound a determined state obtained by a program of the controller 10 to an operator. The bus 28 serves as a line for integrally connecting the CPU 12, the first storage medium 14, the second storage medium 16, the third storage medium 18, the input device 20, the display device 22, the input and output interface 24, the speaker 26, and the like to achieve communication therebetween.

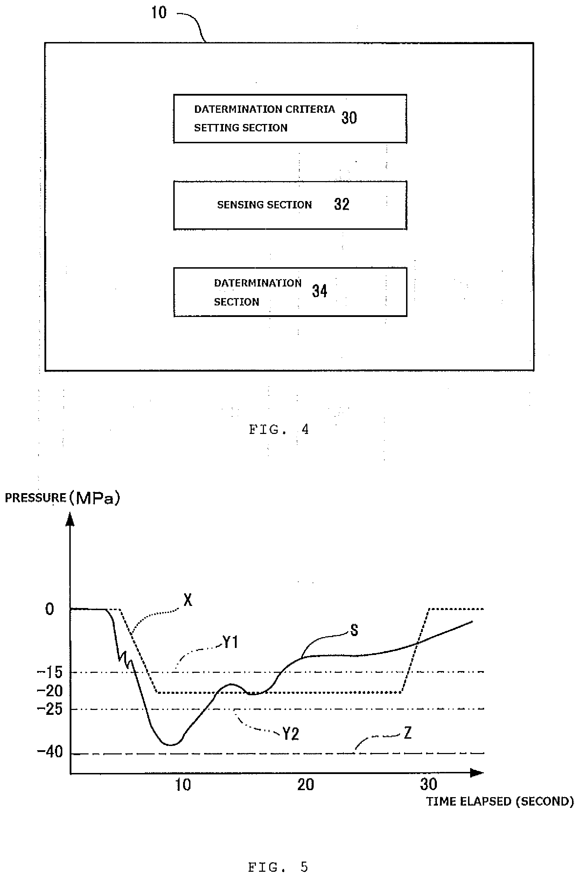

FIG. 4 shows a functional configuration obtained by executing a measuring program stored in the controller 10 at the CPU 12. The controller 10 is configured to include, as its functional configuration, a determination criteria setting section 30, a sensing section 32, and a determination section 34. The determination criteria setting section 30 sets determination criteria used for determining whether an operation of the plunger 120 performed by an operator is skillful or not. For example, an ideal operation criterion value, an ideal upper limit value and an ideal lower limit value, a lowermost limit value and an uppermost limit value, and the like can be set as determination criteria. As shown in FIG. 5, for example, an ideal operation criterion value X takes a drawing operation waveform such that the internal space 72 of the coupling container 70 reduces its pressure from 0 Pa to -20 Pa at a constant rate, maintains it at -2 Pa for about 30 seconds, and then raises it up to 0 Pa at a constant rate. An ideal upper limit value Y1 and an ideal lower limit value Y2 are fixed threshold values at ± 5 Pa from the target value of -20 Pa. A lowermost limit value Z is a fixed threshold value of -40 Pa for determining an abrupt drawing operation.

The sensing section 32 detects signals from the pressure sensor 80 or the flow rate sensor 90 during a period of time from the onset of an operation to the completion thereof and records the sensing data on the third storage medium 18. The determination section 34 compares the sensing data detected at the sensing section 32 with a determination criterion value set at the determination criteria setting section 30, makes various determinations, and provides determination output instructions. As specifically shown in FIG. 5, the determination section 34 compares sensing data S with the ideal operation criterion value X. If a difference therebetween exceeds a predetermined value, the determination section 34 instructs the speaker 26 to emit an alarm sound. Furthermore, the volume level or sound quality of the alarm sound may be varied depending on the magnitude of such a difference, for example. The determination section 34 also makes a determination on the sensing data S and the ideal upper limit value Y1 and the ideal lower limit value Y2. If the sensing data S is out of a range therebetween, the determination section 34 instructs to emit an alarm sound. Furthermore, the determination section 34 instructs to emit an alarm sound if the sensing data S exceeds the lowermost limit value Z. Although there is illustrated herein a case where a determination result is outputted as an alarm sound, it may be outputted as light; it may be outputted as a numerical value, a level gauge, or the like; or it may be outputted as an image or an audio message. Moreover, although there is illustrated herein a case where the state of an unskillful operation is outputted as an alarm, a preferable operation state may be informed with a sound, light, an image, or the like.

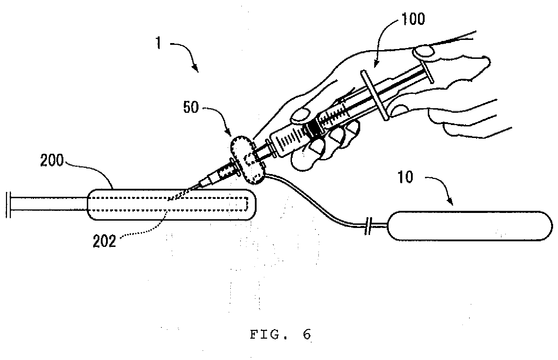

FIG. 6 shows a state where the syringe operation detection device 1 is used. An operator sets the intermediate inserting member 50 of the syringe operation detection device 1 between the syringe barrel 110 of the syringe 100 and the syringe needle 130 and starts the sensing of the controller 10. Thereafter, artificial blood inside an artificial blood vessel 202 is collected by stinging the needle tip of the syringe needle 130 into the artificial blood vessel 202 inside an artificial skin 200 and pulling up the plunger 120. The artificial blood is passed through the inside of the syringe needle 130, spread across the internal space 72 of the intermediate inserting member 50, and further introduced into the syringe barrel 110. The pressure and flow rate of the artificial blood during blood collection are sensed by the pressure sensor 80 and the flow rate sensor 90 and determined by the controller 10. The sensing data is digitally-represented on the display device 22 on a real-time basis, and the determination result thereof is simultaneously informed with a sound from the speaker 26.

According to the syringe operation detection device 1 of the present embodiment described above, the syringe 100 actually used in medical practice is employed, and a state of the plunger 120 being operated can be detected on the basis of a pressure or flow rate of a liquid inside. Thus, when the syringe operation detection device 1 is used as a practice device, the syringe 100 purchased by the medical facility can be employed as it is, thereby practicing blood collection or drug administration under a condition similar to the actual performance. Moreover, since the intermediate inserting member 50 includes the female joint part 52 and the male joint part 60 capable of fitting with the barrel tip 116 and the needle hub 132 specified by the standard, it can be set to the syringes 100 of various sizes and types.

Furthermore, while the total length of the syringe 100 is increased in some degree due to the intermediate inserting member 50 in which the female joint part 52 and the male joint part 60 are coaxially fixed, the feel of use is almost the same as the actual state. In particular, since the coupling container 70 of the intermediate inserting member 50 has a shape extending more in the radial direction with respect to the female joint part 52 and the male joint part 60 coaxially fixed thereto, a detector such as the pressure sensor 80 can be placed at a position shifted from the central axis of the female joint part 52 and the male joint part 60. As a result, the female joint part 52 and the male joint part 60 can be brought close to each other, thereby allowing the intermediate inserting member 50 to be compactly configured in the axial direction thereof and thus reducing a feeling of strangeness during the use thereof.

Furthermore, according to the syringe operation detection device 1, an operation state can be determined on a real-time basis by the controller 10 and informed to the operator. Thus, it is possible to figure out in objective terms whether one's own operation is skillful or not during the operation of the syringe 100. If the syringe operation detection device 1 is used as a practice instrument, it becomes possible to increase the pace of progress. Since the controller 10 informs an operation state to an operator by means of a sound especially in the present embodiment, the observing point of the operator can be concentrated on the syringe 100.

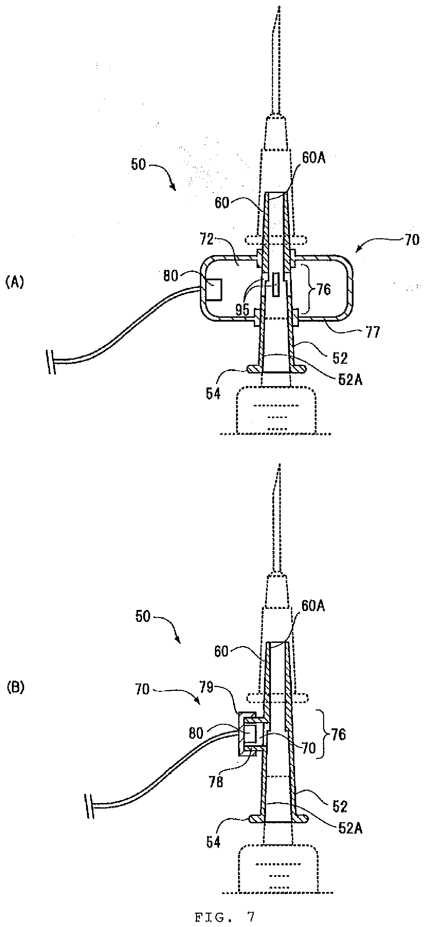

Furthermore, although the present embodiment illustrates a case where the coupling container 70, the female j oint part 52, and the male j oint part 60 are integrally formed in the intermediate inserting member 50, the present invention is not limited thereto. As shown in FIG. 7 (A), for example, it is also preferable that a space between the female joint part 52 and the male joint part 60 be connected with a coaxial connecting region 76 to achieve integral molding and a tubular fit casing 77 be fitted to the outer periphery of the connecting region 76 so as to cover the circumference of the connecting region 76. In this case, the connecting region 76 and the fit casing 77 conceptually function as the coupling container 70 of the present invention. In order to make the internal space 72 of the coupling container 70 continuous with the internal spaces of the female joint part 52 and the male joint part 60, the connecting region 76 is circumferentially provided with a plurality of through holes 95 running through in the radial direction. By forming such a dual-partitioned configuration of the intermediate inserting member 50, a resin molding process thereof is simplified, thereby achieving a reduction in the manufacturing cost.

Alternatively, as shown in FIG. 7(B), for example, it is also preferable that a space between the female joint part 52 and the male joint part 60 be connected with the coaxial connecting region 76 to achieve integral molding and a lead-out tube 78 extending in the radial direction be provided midway along the connecting region 76. A pressure sensor or a flow rate sensor is contained in the lead-out tube 78, and a tip thereof is sealed by a cap 79. In this case, the connecting region 76, the lead-out tube 78, and the cap 79 conceptually function as the coupling container 70 in the present invention, and the inside of the lead-out tube 78 functions as the internal space 72. Although not specifically illustrated herein, it is also possible to connect a tube to the lead-out tube 78 and to place a detector (sensor) at a farther position.

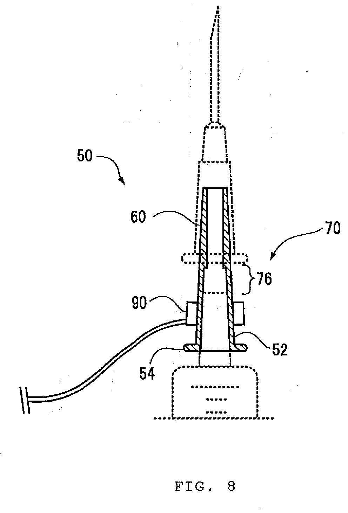

Furthermore, although the present embodiment only illustrates a case where a detector (pressure sensor) is placed within the coupling container 70, the present invention is not limited thereto. As shown in FIG. 8, for example, a space between the female joint part 52 and the male joint part 60 may be connected with the coaxial connecting region 76 (corresponding to the coupling container 70) to achieve integral molding, and a detector (the flow rate sensor 90) may be placed around the side of the female joint part 52. In this manner, it becomes possible to bring the female joint part 52 and the male joint part 60 close to each other further, thereby further downsizing the intermediate inserting member 50 in the axial direction thereof. It is also possible to place a detector (sensor) on the side of the male joint part 60 although the space therefor is smaller.

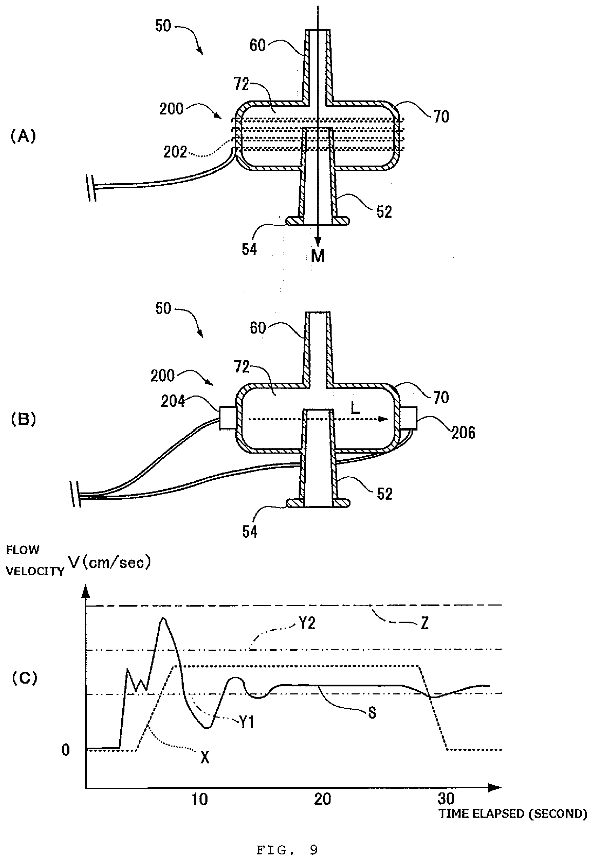

Furthermore, although the present embodiment only illustrates a case where the pressure sensor and the flow rate sensor are placed on the coupling container 70 of the intermediate inserting member 50, the present invention is not limited thereto. As shown in FIG. 9(A), for example, it is also preferred to place a flow velocity sensor 200 in the coupling container 70. The flow velocity sensor 200 includes a cyclic coil 202, and the coil 202 is placed inside or outside the coupling container 70. In this case, a magnetic fluid M is used as artificial blood and passed through the ring of the coil 202. As a result, a flow velocity of the artificial blood can be detected with the coil 202.

Aflowvelocitysensor200 shown in FIG. 9(B), for example, includes a light emitting element 204 and a light receiving element 206 placed in the coupling container 70 of the intermediate inserting member 50. The light emitting element 204 emits light L from a direction perpendicular to the flow of the artificial blood. The light receiving element 206 receives the light L having passed through the artificial blood. The flow velocity of the blood can be directly detected by the amount of light detected by the light receiving element 206.

FIG. 9(C) schematically shows a temporal change in flow velocity values V detected by the flow velocity sensor 200 during an operation. As compared to a pressure value shown in FIG. 5, this output is a value corresponding to a first-order differentiation thereof. Thus, the pressure value is obtained by integrating the output value of the flow velocity sensor 200. Therefore, such flow velocity sensing data S is compared to the ideal operation criterion flow velocity value X, and the speaker is made to emit an alarm sound if a difference therebetween exceeds a predetermined value. Alternatively, a determination may be made on the sensing data S and an ideal lower limit flow velocity value Y1 and an ideal upper limit flow velocity value Y2, and an alarm sound may be emitted if the sensing data S is out of a range therebetween. Furthermore, an alarm sound may be emitted when the sensing data S exceeds an uppermost limit flow velocity value Z. Needless to say, various determinations can be made by utilizing a value obtained by integrating the flow velocity value V.

Although the present embodiment illustrates a case where the syringe operation detection device 1 is used for the purpose of practicing a syringe operation, which is one of preferable usages thereof, the present invention is not limited thereto. By using the syringe operation detection device 1 also in the actual medical practice, the accuracy of real blood collection or drug administration can be increased. Moreover, an operation state of the syringe 100 can be stored as objective data. For example, it can be utilized as syringe operation historical data in medical practice.

Note that the syringe operation practice device of the present invention is not limited to the above-described embodiment, and various changes obviously may be made thereto without departing from the scope of the present invention.

### Industrial Applicability

The syringe operation practice device of the present invention is not limited to a use by healthcare professionals. It may be used for various applications where a syringe is operated.

## Claims

1. A syringe operation detection device for detecting a drawing or injecting operation of a plunger (120) in a syringe (100), the device comprising:
a female joint part (52) to be joined to a barrel tip (116) in a syringe barrel (112) of the syringe (100);
a male joint part (60) to be joined to a needle hub (132) of a syringe needle (130) in the syringe;
a coupling container (70) placed between the female joint part (52) and the male joint part (60), for allowing the female joint part (52) to be continuous with the male joint part (60) while being closed externally;
a detector (80) placed in any one of the coupling container (70), the female joint part (52), and the male joint part (60), the detector detecting a pressure a flow velocity, or a flow rate of a fluid moving between the syringe barrel (112) and the syringe needle (130); and
a controller (10) including a sensing section (32) for detecting a signal inputted from the detector (80),
**characterized in that**
the device is a practice device for a syringe operation, and
the controller (10) further includes:
a determination criteria setting section (30) for setting a time series ideal operation criterion value indicative of a time series change of the signal when a human ideally operates the plunger; and
a determination section (34) for determining whether the operation of the plunger (120) is skillful or not based on a time series difference between the signal and the ideal operation criterion value and informing a determination result to an operator by means of light, an image, or a sound.

2. The syringe operation detection device according to claim 1, wherein
the determination section (34) varies an informing mode of the determination result in real time depending on a magnitude of the difference between the signal and the ideal operation criterion value.

3. The syringe operation detection device according to claim 1 or 2, wherein
the female joint part (52) and the male joint part (60) are coaxially fixed.

4. The syringe operation detection device according to claim 1, 2 or 3, wherein
the detector (80) includes a pressure sensor placed inside the coupling container (70).

5. The syringe operation detection device according to claims 1 to 4, wherein
the detector (80) includes a flow rate sensor (90) placed in the coupling container (70).

6. The syringe operation detection device according to any of claims 1 to 5, wherein
the detector (80) includes a flow velocity sensor (200) placed in the coupling container (70).

7. The syringe operation detection device according to any of claims 1 to 6, wherein
the coupling container (70) has a shape extending more in a radial direction with respect to the female joint part (52) and the male joint part (60), and
the detector (80) is placed at a position shifted in the radial direction from a central axis of the female joint part (52) and the male joint part (60).

## Patentansprüche

1. Spritzenanwendungserfassungsvorrichtung zum Erfassen eines Zieh- oder Einspritzvorgangs eines Kolbens (120) in einer Spritze (100), wobei die Vorrichtung umfasst:
ein weibliches Fügeteil (52), das mit einer Zylinderspitze (116) in einem Spritzenzylinder (112) der Spritze (100) zu fügen ist;
ein männliches Fügeteil (60), das an einen Nadelanschluss (132) einer Spritzennadel (130) in der Spritze zu fügen ist;
einen Kopplungsbehälter (70), der zwischen dem weiblichen Fügeteil (52) und dem männlichen Fügeteil (60) platziert ist, um dem weiblichen Fügeteil (52) zu ermöglichen, mit dem männlichen Fügeteil (60) kontinuierlich zu sein, während es extern geschlossen ist;
einen Erfasser (80), der in einem aus dem Kopplungsbehälter (70), dem weiblichen Fügeteil (52) und dem männlichen Fügeteil (60) platziert ist, wobei der Erfasser einen Druck oder eine Strömungsgeschwindigkeit oder eine Strömungsrate eines Fluids erfasst, das sich zwischen dem Spritzenzylinder (112) und der Spritzennadel (130) bewegt; und
eine Steuerung (10) mit einem Fühlabschnitt (32) zum Erfassen eines von dem Erfasser (80) eingegebenen Signals,
**dadurch gekennzeichnet, dass**
das Gerät ein Praxisgerät für eine Spritzenanwendung ist, und
die Steuerung (10) außerdem hat:
einen Bestimmungskriteriumeinstellabschnitt (30) zum Einstellen eines idealen Anwendungskriteriumwerts einer Zeitserie, der eine Zeitserienänderung des Signals anzeigt, wenn ein Mensch den Kolben ideal betätigt; und
einen Bestimmungsabschnitt (34), um ausgehend von einem Zeitserienunterschied zwischen dem Signal und dem idealen Anwendungskriteriumwert zu bestimmen, ob die Anwendung des Kolbens (120) expertenmäßig ist oder nicht, und Informieren eines Bestimmungsergebnisses an einen Bediener mittels eines Lichts, eines Bilds oder eines Tons.

2. Spritzenanwendungserfassungsvorrichtung nach Anspruch 1, wobei
der Bestimmungsabschnitt (34) eine Informierungsbetriebsart des Bestimmungsergebnisses in Realzeit abhängig von einer Größenordnung des Unterschieds zwischen dem Signal und dem idealen Anwendungskriteriumwert variiert.

3. Spritzenanwendungserfassungsvorrichtung nach Anspruch 1 oder 2, wobei
das weibliche Fügeteil (52) und das männliche Fügeteil (60) koaxial befestigt sind.

4. Spritzenanwendungserfassungsvorrichtung nach Anspruch 1, 2 oder 3, wobei
der Erfasser (80) einen innerhalb des Kopplungsbehälters (70) platzierten Drucksensor hat.

5. Spritzenanwendungserfassungsvorrichtung nach den Ansprüchen 1 bis 4, wobei
der Erfasser (80) einen Strömungsratensensor (90) hat, der in dem Kopplungsbehälter (70) platziert ist.

6. Spritzenanwendungserfassungsvorrichtung nach einem der Ansprüche 1 bis 5, wobei
der Erfasser (80) einen Strömungsgeschwindigkeitssensor (200) hat, der in dem Kopplungsbehälter (70) platziert ist.

7. Spritzenanwendungserfassungsvorrichtung nach einem der Ansprüche 1 bis 6, wobei
der Kopplungsbehälter (70) eine Form aufweist, die sich mehr in einer radialen Richtung mit Bezug auf das weibliche Fügeteil (52) und das männliche Fügeteil (60) erstreckt, und
der Erfasser (80) an einer Position platziert ist, die von einer Mittelachse des weiblichen Fügeteils (52) und des männlichen Fügeteils (60) in der radialen Richtung verschoben ist.

## Revendications

1. Dispositif de détection d'actionnement de seringue pour détecter une opération d'aspiration ou d'injection d'un piston (120) dans une seringue (100), le dispositif comprenant :
une partie de joint femelle (52) destinée à être assemblée à une pointe de corps cylindrique (116) dans un corps cylindrique de seringue (112) de la seringue (100) ;
une partie de joint mâle (60) destinée à être assemblée à un raccord d'aiguille (132) d'une aiguille de seringue (130) dans la seringue ;
un récipient de couplage (70) placé entre la partie de joint femelle (52) et la partie de joint mâle (60), pour permettre à la partie de joint femelle (52) d'être continue avec la partie de joint mâle (60) tout en étant fermée extérieurement ;
un détecteur (80) placé dans l'un quelconque parmi le récipient de couplage (70), la partie de joint femelle (52) et la partie de joint mâle (60), le détecteur détectant une pression de vitesse d'écoulement ou un débit d'un fluide se déplaçant entre le corps cylindrique de seringue (112) et l'aiguille de seringue (130) ; et
un organe de commande (10) comprenant une section de détection (32) pour détecter un signal émis à partir du détecteur (80),
**caractérisé en ce que** :
le dispositif est un dispositif pratique pour un actionnement de seringue, et
l'organe de commande (10) comprend en outre :
une section de réglage de critères de détermination (30) pour régler une valeur de critère d'opération idéale chronologique indiquant un changement chronologique du signal lorsqu'un être humain actionne idéalement le piston ; et
une section de détermination (34) pour déterminer si l'actionnement du piston (120) est intelligent ou non en fonction d'une différence chronologique entre le signal et la valeur de critère d'actionnement idéale et tenir un opérateur informé d'un résultat de détermination au moyen d'une lumière, d'une image ou d'un son.

2. Dispositif de détection d'actionnement de seringue selon la revendication 1, dans lequel :
la section de détermination (34) modifie un mode d'information du résultat de détermination en temps réel en fonction d'une grandeur de la différence entre le signal et la valeur de critère d'actionnement idéale.

3. Dispositif de détection d'actionnement de seringue selon la revendication 1 ou 2, dans lequel :
la partie de joint femelle (52) et la partie de joint mâle (60) sont fixées de manière coaxiale.

4. Dispositif de détection d'actionnement de seringue selon la revendication 1, 2 ou 3, dans lequel :
le détecteur (80) comprend un détecteur de pression placé à l'intérieur du récipient de couplage (70).

5. Dispositif de détection d'actionnement de seringue selon les revendications 1 à 4, dans lequel :
le détecteur (80) comprend un capteur de débit (90) placé dans le récipient de couplage (70).

6. Dispositif de détection d'actionnement de seringue selon les revendications 1 à 5, dans lequel :
le détecteur (80) comprend un capteur de vitesse d'écoulement (200) placé dans le récipient de couplage (70).

7. Dispositif de détection d'actionnement de seringue selon les revendications 1 à 6, dans lequel :
le récipient de couplage (70) a une forme s'étendant davantage dans une direction radiale par rapport à la partie de joint femelle (52) et la partie de joint mâle (60), et
le détecteur (80) est placé dans une position décalée dans la direction radiale par rapport à un axe central de la partie de joint femelle (52) et de la partie de joint mâle (60) .
